# EUROPÄISCHE PATENTSCHRIFT

(11) **EP 1 003 924 B1**
(45) Veröffentlichungstag und Bekanntmachung des Hinweises auf die Patenterteilung: **01.10.2003**
(21) Anmeldenummer: 98941371.1
(22) Anmeldetag: 20.07.1998
(51) Int. Cl.: C23C 4/12, C23C 4/16

(54) **THERMISCHES BESCHICHTUNGSVERFAHREN, INSBESONDERE FÜR GLEITLAGER**
METHOD FOR THERMAL COATING, ESPECIALLY FOR PLAIN BEARINGS
PROCEDE DE TRAITEMENT THERMIQUE, NOTAMMENT POUR PALIER LISSE

(30) Priorität: 28.07.1997 DE 19732401; 01.08.1997 DE 19733197; 06.08.1997 DE 19733930; 07.08.1997 DE 19734178; 11.08.1997 DE 19734461
(43) Veröffentlichungstag der Anmeldung: 31.05.2000
(73) Patentinhaber: Volkswagen Aktiengesellschaft, 38436 Wolfsburg (DE)
(72) Erfinder: SCHLEGEL, Udo, D-38159 Vechelde (DE); VOGELSANG, Reinhard, 38226 Salzgitter (DE)
(74) Vertreter: Pohlmann, Bernd Michael
(86) Internationale Anmeldenummer: EP9804498
(87) Internationale Veröffentlichungsnummer: WO99005339

(56) Entgegenhaltungen:
- EP-A- 0 250 308
- EP-A- 0 816 527
- WO-A-90/08203
- WO-A-96/04485
- WO-A-97/13884
- BE-A- 1 000 078
- DE-C- 876 787
- DE-C- 3 814 362
- US-A- 2 423 490
- US-A- 5 271 967
- US-A- 5 466 906
- US-A- 5 592 927

## Beschreibung

Die Erfindung betrifft ein Verfahren zum Herstellen einer Beschichtung gemäß dem Oberbegriff des Anspruchs 1.

Bei thermischen Beschichtungen, insbesondere der Plasmabeschichtung, wird das Beschichtungsmaterial, insbesondere ein Metall, in Pulver- oder Stabform einer Flamme zugeführt, in dieser aufgeschmolzen und auf einem Substrat niedergeschlagen. Hierbei kann eine Oxidation eines Teils des Beschichtungsmaterials stattfinden, wobei die Oxide in der Beschichtung eingeschlossen werden. Diese Oxide beeinflussen einerseits die Microhärte der Beschichtung, andererseits bilden sie in dieser eine Porosität. Zum Teil kann diese Porosität erwünscht sein, beispielsweise zur Bindung eines Ölfilms in einem Gleitlager oder auch auf Laufflächen, andererseits kann durch die Porosität die Stabilität der Beschichtung zu gering sein. Die Porosität kann durch Wahl des Beschichtungsmaterials wie auch durch eine Partikelgröße oder Partikelmorphologie beeinflußt werden. Die Bildung von Oxiden ergibt sich üblicherweise durch den Sauerstoffgehalt der Umgebungsluft. Nur bei Arbeiten unter Vakuum wird der Sauerstoff abgepumpt und in einer Schutzgasatmosphäre gearbeitet. Hierdurch werden beim Plasmabeschichten unter Vakuum Oxidanschlüsse weitestgehend ausgeschlossen.

Bei der Beschichtung von Innenräumen, beispielsweise Zylinderlaufflächen und insbesondere Pleuelaugen, sind jedoch die Möglichkeiten der Prozeßvariation stark begrenzt, da die Innenräume meist verhältnismäßig beengt sind, so daß die Prozeßfreiheit relativ gering ist. Insbesondere ergeben sich bei der Herstellung von Pleueln noch eine Vielzahl weiterer Probleme. Ein Arbeiten unter Vakuum ist hier nicht angebracht, insbesondere auch wegen der zu hohen Kosten dieses Verfahrens.

Die heute zum Einsatz kommenden Pleuel, insbesondere für Brennkraftmaschinen, werden als sogenannte geschnittene Pleuel oder als Crackpleuel ausgeführt. Geschnitten oder gecrackt wird hierbei das große Pleuelauge, das die Kurbelwelle umgreift. Das kleine Pleuelauge braucht in der Regel nicht geöffnet zu werden, da es über einen geraden Bolzen mit dem Kolben verbunden wird.

Je nach Lagerbelastung, werden die Pleuelaugen mit unterschiedlichen Lagerschalen (Gleitlager) ausgestattet. Als Lagerschalen kommen insbesondere Stützschalenwerkstoffe zum Einsatz, die in der Regel aus Stahl C 10 nach DIN 17210 bzw. SAE 1010 gebildet sind. Die Lagerschalen können je nach Bauform und Verwendung kalt verfestigt sein. Auf diesen Stützschalenwerkstoff kann die eigentliche Gleitlagerlaufschicht, beispielsweise Weißmetall, Bleibronze, Leichtmetall, Spatterschichten o. ä., in Abhängigkeit der zu erwartenden Lagerbelastung aufgebracht werden. Die Ausführung der Lagerschalen kann als Dreistoff-, Zweistoff- oder Massivlagerschale oder anderes erfolgen. Damit die Lagerschalen nach der Montage einen einwandfreien Festsitz erreichen, werden die Lagerschalen mit einer Vorspannung montiert.

Die Lagerschalen stellen nicht nur einen materiellen Kostenfaktor dar, sie beinhalten auch einen Produktionsaufwand und stellen eine Fehlerquelle dar. So kann beispielsweise bei der Montage der Einsatz einer Lagerschale oder Lagerschalenhälfte vergessen werden, wodurch es zu erheblichen Motorschäden kommt.

Bei der Beschichtung eines Pleuelauges, das üblicherweise einen Durchmesser im Bereich von Millimetern bis wenige Zentimetern hat (< 8 cm und insbesondere < 6 cm), besteht bei der thermischen Beschichtung das Problem, daß je nach verwendetem Material eine verhältnismäßig starke Oxidbildung erfolgt, so daß die gesamte Porosität einer Lagerschicht durchaus über 3% betragen kann. Hierdurch kann die Stabilität des Lagers beeinträchtigt sein. Grundsätzlich ist jedoch ein geringer Anteil an Poren in der Lauffläche wegen des damit verbundenen Ölrückhaltevolumens erwünscht.

Gemäss dem in der US-A-5,592,927 beschriebenen Verfahren wird von einem Plasmabrenner mittels eines primären Gases eine Plasmaflamme gebildet, die von einem Metalldraht gelieferte Tröpfchen eines oxidierbaren Beschichtungsmaterials beschleunigt, erhitzt und auf einer Innenfläche abscheidet. Ein sekundärer Gasstrom, der radial einwärts zur Achse der Flamme gerichtet ist, ist vorgesehen zur verbesserten Kontrolle des Oxidationsprozesses. Der sekundäre Gasstrom wird lediglich eingesetzt um den Oxidationsprozess der durch das primäre Gas beschleunigten Tröpfchen zu beeinflussen. Ferner ist aus der EP-A-0 250 308 ein Satz von Gasaustrittsöffnungen zum Ausschleudern eines flankierenden Gases bekannt.

Dem erfindungsgemäßen Verfahren liegt die Aufgabe zugrunde, eine Lenkung und gleichzeitige Kühlung der bewegten Flamme beim thermischen Beschichten zu gewährleisten.

Diese Aufgabe wird hinsichtlich des Verfahrens gelöst mit den Maßnahmen des Anspruchs 1.

Die Unteransprüche zeigen bevorzugte Ausführungsformen.

Bei dem erfindungsgemäßen Verfahren zum thermischen Beschichten einer Innenfläche kommt ein Brenner zum Einsatz, dessen Plasmaflamme über die zu beschichtende Innenfläche bewegt wird. Dies erfolgt insbesondere durch Rotation des Brenners, wobei vorteilhaft auch die Innenfläche rotationssymetrisch aufgebaut ist. Die Plasmaflamme wird durch einen elektrische gezündeten Lichtbogen unter Zuführung der Plasmagase vorzugsweise Argon, oder ein Gemisch aus Argon, Helium, Stickstoff und Wasserstoff gebildet. Hierbei kann die Brenntemperatur insbesondere oberhalb 10.000 °C, beispielsweise 15.000 bis 30.000 °C betragen. In die Flamme wird der Beschichtungswerkstoff eingebracht, beispielsweise über eine Pulverzuführung oder über einen Draht bzw. Stift. Hierbei wird der Beschichtungswerkstoff erhitzt, auf beispielsweise 400 bis 600 m/s beschleunigt und auf der Innenfläche unter Bildung der Beschichtung abgeschieden. Je nach Betriebsbedingungen und verwendetem Beschichtungswerkstoff erfolgt dabei eine teilweise Oxidation desselben. Die Flamme wird von einem Gasstrom, der nicht brennbar (kein Brenngas) ist, flankiert, wobei dieser Gasstrom vorzugsweise die Flamme lenkt bzw. richtet. Dies ist insbesondere dann vorteilhaft, wenn die Flamme verhältnismäßig schnell bewegt wird, wie es beispielsweise bei rotierenden Flammenbeschichtungen der Fall ist. Typische Rotationsgeschwindigkeiten liegen bei 10-500 U/min und insbesondere 50-300 U/min. Gleichzeitig kann der Gasstrom auch der Kühlung des Brennerkopfes dienen. Erfindungsgemäß wird hierbei nicht wie üblich Luft eingesetzt, sondern ein Gasstrom mit einem reduzierten Sauerstoffgehalt, wobei der Sauerstoffgehalt unter 18% liegt. Der Sauerstoffgehalt kann auch auf Null gehen, wobei vorteilhaft als Gasstrom Stickstoff, jedoch auch Edelgase wie Argon zum Einsatz kommen können. Grundsätzlich sind die verschiedensten Inertgase einsetzbar. Durch das Absenken des Sauerstoffgehaltes wird ein geringerer Einschluß von Oxiden des Beschichtungswerkstoffes in der Beschichtung erreicht, wodurch gleichzeitig die Gesamtporosität der Beschichtung sinkt.

Das Verfahren findet besonders bevorzugt Anwendung bei der Beschichtung eines Pleuelauges.

Erfindungsgemäß kann in ein Pleuelauge, hierbei handelt es sich insbesondere um das große Pleuelauge, ggf. auch beide Pleuelaugen, vorteilhaft nicht mehr eine Lagerschale eingesetzt werden, sondern die Lagerschicht wird direkt durch thermisches Spritzen auf dem Pleuelauge aufgebracht. Als thermisches Spritzen kommt insbesondere Plasmaspritzen zum Einsatz. Die Pleuel sind insbesondere Teile einer Verbrennungskraftmaschine. Zur Steigerung der Haftzugfestigkeit der Lagerschicht kann das zu beschichtende Material des Pleuelauges aufgerauht werden, wobei vorteilhaft mit unterschiedlichen Sieblinien gestrahlt wird. Zur Erhöhung der Restölmenge auf der Lagerschicht kann diese eine Nut aufweisen und/oder ist microporös.

Gemäß der vorliegenden Erfindung erfolgt vor dem Aufbringen der Lagerschicht vorteilhaft eine Bearbeitung des Pleuelauges, bei der dieses auf ein Istmaß, das innerhalb eines Toleranzbereiches eines Nennmaßes liegt, bearbeitet wird. Die Bearbeitung erfolgt hierbei insbesondere spanabhebend, beispielsweise durch Spindeln. Besonders vorteilhaft erfolgt diese Bearbeitung im Fertigungsprozeß so, daß das Pleuelauge mit seinem Istmaß noch im Toleranzbereich des Nennmaßes liegt, wenn der Lagerwerkstoff aufgespritzt wird. Das bedeutet, daß nach dem Bearbeiten und vor dem Spritzen kein das lstmaß des Pleuelauges aus der Toleranz heraus verändernder Arbeitsschritt erfolgt. Arbeitsschritte, die zwischen dem Bearbeiten und dem Aufspritzen des Lagerwerkstoffes dann noch erfolgen können, sind beispielsweise Aufrauhen der Pleuelaugenoberfläche, Räumen der Pleuelwangen, etc.

Besonders vorteilhaft wird das Pleuelauge durch Cracken geöffnet, wobei üblicherweise die Arbeitsschritte Kerben und Brechen zum Einsatz kommen. Wie bereits erwähnt, erfolgt insbesondere nach dem Crack-Vorgang das erfindungsgemäße Bearbeiten, alternativ - besonders vorteilhaft jedoch zusätzlich - erfolgt das Bearbeiten des Durchmessers des Pleuelauges auch vor dem Crack-Vorgang bzw. Öffnen des Pleuelauges.

Das Bearbeiten des Pleuelauges vor dem Öffnen, insbesondere durch Cracken, hat den Vorteil, daß ein sauberer Crack-Vorgang durchgeführt werden kann, der zu einem nur geringen Verzug führt, so daß das Pleuelauge gegebenenfalls ohne spanabhebende Nachbearbeitung beschichtet werden kann. Besonders vorteilhaft ist beim Bearbeiten nach dem Öffnen des Pleuelauges, daß die Lagerschicht auf ein Pleuelauge mit einem Durchmesser einer bekannten, geringen Toleranz aufgespritzt werden kann, so daß ein sehr dünner Auftrag möglich ist. Vorteilhaft erfolgt hierzu das Bearbeiten auf eine Toleranz von 120 µm, vorzugsweise 75 µm und insbesondere 50 µm. So ist es erfindungsgemäß möglich, den Lagerwerkstoff in einer durchschnittlichen Dicke (vor einer Nachbearbeitung) von 100-600 µm, insbesondere 150-400 µm aufzutragen, wobei bei einem eingespielten Serienverfahren Schichtdicken in der unteren Hälfte der angegebenen Bereiche möglich sind. Diese liegen um ca. 50-200 µm unter den Schichtdicken, die ohne den erfindungsgemäßen Bearbeitungsschritt des Durchmessers des Pleuelauges notwendig wären.

Bei dem erfindungsgemäßen Verfahren kann der Abtrag der aufgebrachten Lagerschicht zu ihrer Gebrauchsstärke gering bemessen werden, so daß man üblicherweise mit durchschnittlich 100-400 µm und insbesondere mit 150-250 µm Abtrag auskommt.

Entsprechend lassen sich vorteilhaft mit dem erfindungsgemäßen Verfahren Lagerschichten in einer durchschnittlichen Gebrauchsstärke von 30-200 µm und insbesondere 60-150 µm erzeugen (d.h. nach einer spanabhebenden Nachbearbeitung der Lagerschicht). Da die Lagerschicht wenig zur Festigkeit des Pleuelauges beiträgt, hat das erfindungsgemäße Verfahren mit der besonders dünnen Lagerschicht neben dem oben beschriebenen Kostenvorteil noch den Vorteil, daß beim Querschnitt des Materials des Pleuelauges eine Stärke erreichbar ist, die bei gleichen Außenmaßen des Pleuelauges bisher nicht realisiert werden konnte. Im Bereich der Pleueldeckelverschraubung konnte beispielsweise insgesamt ein Stärkenzuwachs von ca 2,4 mm je Seite erzielt werden, mehr als mit allen anderen bekannten Gleitlagerbeschichtungen.

Bei dem erfindungsgemäßen Verfahren werden besonders vorteilhaft folgende Arbeitsschritte eingesetzt:
- Vorspindeln des Pleuelauges am Rohpleuel;
- Cracken des Pleuelauges (durch Kerben und Brechen);
- Nachspindeln des wieder zusammengesetzten Pleuelauges auf Beschichtungstoleranz;
- Plasmabeschichten des Pleuelauges;
- Fertigspindeln der Plasmabeschichtung auf Lagertoleranz.

Mit dieser Kombination an Fertigungsschritten wird ein Optimum an Festigkeit des Pleuelauges bei niedrigsten Herstellungskosten erreicht. Grundsätzlich ist das erfindungsgemäße Verfahren auch bei geschnittenen Pleueln anwendbar, wobei jedoch hier durch das Aufschneiden des Pleuels gegenüber dem Cracken ein Kostennachteil in Kauf genommen wird.

Vorteilhaft wird der Lagerwerkstoff im Verlaufe des thermischen Spritzens, insbesondere Plasmaspritzens, mit unterschiedlichen Temperaturen auf dem Substrat abgeschieden. Die unterschiedlichen Temperaturen können mit den unterschiedlichsten Parameteränderungen erreicht werden, wobei ein oder mehrere Parameter geändert werden können. Die zu ändernden Parameter sind insbesondere für eine Temperaturerhöhung, Erhöhung des Stroms- bzw. der Spannung am Brenner, Verringerung der Zufuhr des Kühlgases bzw. Trägergases, Erhöhung der Brenngaszufuhr (beispielsweise Wasserstoff), Verringerung des Massestroms des zuzuführenden Lagerwerkstoffes, Verringerung der Partikelgröße des Lagerwerkstoffes bzw. Veränderung der Zusammensetzung des Lagerwerkstoffes. Zur Verringerung der Abscheidetemperatur kann bei einem oder mehreren der Parameter gegensätzlich verfahren werden.

Besonders vorteilhaft wird die Aufbringtemperatur des Lagerwerkstoffes im Verlaufe des thermischen Spritzens abgesenkt. Grundsätzlich kann zu einem späteren Zeitpunkt die Aufbringtemperatur wieder angehoben werden, vorteilhaft bleibt sie jedoch abgesenkt. Besonders vorteilhaft wird, wenn die Oberfläche der thermisch gespritzten Lagerschicht abgetragen wird, der abzutragende Teil der Lagerschicht bei einer niedrigen Temperatur gespritzt, wobei der Abtrag gewünschtenfalls bis in einen Lagerschichtbereich erfolgt, der bei einer höheren Temperatur gespritzt wurde. Bei diesem Verfahren kann besonders vorteilhaft die Temperatur soweit abgesenkt werden, daß der abzutragende Bereich der Lagerschicht einen verhältnismäßig minderwertigen Schichtanteil enthält, der nach dem Nacharbeiten der Lagerschicht entfernt ist.

Bei dem erfindungsgemäßen Verfahren kann die Anfangstemperatur, mit der der Lagerwerkstoff auf dem Pleuelmaterial aufgebracht wird, derart erhöht werden, daß mit einer Aufbringtemperatur gearbeitet wird, die so hoch ist, daß sie zu einem Ausglühen des Pleuelwerkstoffes führen würde, wenn die gesamte notwendige Lagerschicht mit dieser Temperatur aufgebracht würde. Hierdurch erreicht man eine besonders hohe Haftfestigkeit der Lagerschicht auf dem Substrat des Pleuelauges und, gewünschtenfalls, eine niedrigere Porosität in der Lagerschicht.

Die erfindungsgemäß vorteilhaft zum Einsatz kommenden unterschiedlichen Sieblinien werden auch als mesh-Klassen bezeichnet, wobei erfindungsgemäß insbesondere die Klassen von 16 mesh bis 230 mesh (16, 18, 20, 25, 30, 35, 40, 45, 50, 60, 70, 80, 100, 120, 140, 170, 200 und 230) zum Einsatz kommen. Die mesh-Zahl gibt an die Zahl der Löcher pro Quadratinch (pro 6,45 cm²) in dem verwendeten Sieb. Die einzelnen Sieblinien, inklusive Toleranzen und Siebdrahtstärken können beispielsweise dem Handbook of Chemistry and Physics, 64th Edition, 1983/84, CRC Press Inc. Florida, S. F-114, entnommen werden.

Bei der thermischen Beschichtung eines Pleuelauges wurde festgestellt, daß die verwendbaren Lagerschichten, beispielsweise aus Aluminiumbronze, eine hohe Schichteigenspannung haben, die insbesondere dadurch erhöht ist, daß das Material mit einer nur niedrigen Porosität aufgebracht wird. Hierbei zeigt es sich, daß Maßnahmen zur Erhöhung der Haftfestigkeit der Lagerschicht notwendig sind. Dies wird erfindungsgemäß neben einer hohen Anfangsauftragetemperatur vorteilhaft dadurch erreicht, daß das Pleuelauge mit mindestens einer feinen und mindestens einer gröberen Sieblinie sandgestrahlt (partikelgestrahlt) wird.

Die betriebssichere Gestaltung von Pleuellagern verlangt eine verschleißsichere Auslegung und Konstruktion der Lager, um die Lagerkräfte sicher und bei noch zulässigen Temperaturen zu übertragen. Verschleißsicherheit ist immer dann gegeben, wenn die Gleitflächen durch einen tragfähigen Schmierfilm (Ölfilm) voneinander getrennt sind. Ein solcher Schmierfilm ergibt sich bei Gleitlagern durch eine schwach-exzentrische Wellenlagerung. Die rotierende Welle hat hierdurch eine Pumpwirkung, die den Schmierstoff (Motoröl) in den (exzentrischen) Lagerspalt fördert, wobei an den konvergenten Lagerspalten der Öldruck aufgebaut wird. Das heißt, das Schmiermittel wird in den engsten Querschnitt gepreßt. Hierbei entsteht ein Zustand der "Grenzschmierung" (Grenzflächenreibung - Lagermaterial auf Wellenzapfen), wenn die Drehbewegung der Welle beginnt bzw. sehr langsam ist. Eine Zunahme der Drehbewegung bewirkt, daß sich der Ölfilm am Tragen des Wellenzapfens beteiligt, obwohl noch kein zusammenhängender Ölfilm aufgebaut ist. Dies ist ein Zustand der "Mischreibung", d.h. gleichzeitige Grenzflächen- und Schwimmreibung. Dieser Zustand liegt überwiegend beim Anlassen und Abstellen eines Motors vor. Eine weitere Zunahme der Rotationsgeschwindigkeit bewirkt dann die Ausbildung der hydrodynamisch tragenden Schmierfilmschicht mit der Dicke eines halben Lagerspiels. Dieser Zustand ist die "Schwimmreibung". Das Lagerspiel beträgt hierbei üblicherweise 15 bis 60 µm.

Durch die erfindungsgemäße Plasmabeschichtung des (großen) Pleuelauges mit einem entsprechenden Lagermaterial, insbesondere in Verbindung mit Mikroporen und/oder einer Nut innerhalb der Gleitlagerschicht, wird ein hohes Ölrückhaltevolumen innerhalb des Pleuellagers erreicht, wodurch die Reibung und damit der Verschleiß der gegeneinander bewegten Teile, insbesondere bei der Grenzschmierung und der Mischreibung, vermindert sind. Deutlich verbessert wird das Ölrückhaltevolumen durch das Einbringen mindestens einer Nut in das Pleuellager, wobei diese Nut (bzw. Nuten) besonders vorteilhaft als Radialnuten ausgebildet sind. Zur weiteren Erhöhung des Ölrückhaltevermögens beläßt man diese Nuten (zumindest weitgehend) unbearbeitet, d.h. mit der herstellungsbedingten rauhen Oberflächenstruktur.

Die poröse, aber druckstabile Oberflächenstruktur der Gleitlagerfläche, die vorteilhaft spanabhebend bearbeitet ist, und die unbearbeitete Nut mit sehr rauher Oberflächenstruktur bewirken in jedem Lagerzustand, unabhängig von Drehbewegung und Öldruck, daß ein gewisser Ölanteil im Lager gespeichert ist. Hierdurch wird es ermöglicht, den Zustand der Grenzflächen- und Mischreibung schon bei einer geringen Kurbelwellendrehzahl zu durchfahren und damit schneller den Zustand der (nahezu) verschleißfreien hydrodynamischen Schmierung zu erreichen. Das heißt, die Notlaufeigenschaften beim Motoranfahr- und -auslaufzustand werden wesentlich verbessert, wodurch höhere Lagerbelastungen bei gleichen Lagerdimensionen möglich sind.

Die Erfindung hat folgende Vorteile: Es können die sonst bei Pleueln üblichen Lagerschalen, die die Gleitlagerfläche bilden, entfallen, da erfindungsgemäß die Lagerbeschichtung auf den Pleuelwerkstoff (und nicht auf ein extra einzusetzendes Element) aufgebracht werden kann. Hierdurch entfällt auch gleichzeitig die Montage der Lagerschalen. Durch den Wegfall der Lagerschalen und/oder durch eine spanabhebende Nachbearbeitung der erfindungsgemäßen Gleitlagerschicht erreicht man eine Reduzierung der Toleranzen. Bei den üblichen Pleuellagern hat man drei Toleranzen, die erste Toleranz ist die der Kurbelwelle, die zweite Toleranz wird von der Gleitschicht (der Lagerschalen) im Pleuel und die dritte Toleranz vom Pleuelauge, in das die Lagerschale eingesetzt wird, bestimmt. Durch die erfindungsgemäße Beschichtung und Nachbearbeitung der Lagerschicht entfällt die dritte Toleranz. Weiterhin hat man erfindungsgemäß eine größere Materialstärke im Schraubenbereich, da die erfindungsgemäß aufgetragene Lagerschicht eine geringere Stärke hat als eine Lagerschale; hierdurch werden auch höhere Belastungen bei gleichen äußeren Pleuelabmessungen möglich. Die dritte Toleranz (die Toleranz des Pleuelauges) kann bei der vorliegenden Erfindung sehr grob bemessen werden, da sie durch die nachfolgende Beschichtung, die auf das zweite Toleranzmaß, beispielsweise durch Feinspindeln, abgetragen wird, ausgeglichen wird.

Erfindungsgemäß wird die Lagerschicht vorteilhaft derart aufgespritzt, daß sie, ggf. nach einem Schichtabtrag, zumindest in der Oberfläche eine gewisse Porosität hat. Diese Porosität wird dadurch erreicht, daß die Lagerschicht mit Mikroporen hergestellt wird, die auch durch Oxideinschlüsse gebildet werden, die bei der Nachbearbeitung der Schichtoberfläche unter Bildung freier Mikroporen ausgeräumt werden. Der Porositätsanteil liegt im Laufflächenbereich vorteilhaft bei 0,2 bis 6 % und insbesondere beträgt er 0,5 bis 4 %. Vorteilhaft sind die Mikroporen außerdem nicht miteinander verbunden, so daß das Porenvolumen der Mikroporen überwiegend von geschlossenen Poren gebildet ist. Diese Mikroporen bilden ein hydrodynamischen Mikrodruckkammer-Schmiersystem, wobei die Mikroporen beispielsweise durch den spanabhebenden Vorgang der Oberflächenbearbeitung (beispielsweise Feinspindeln) offengelegt werden. Die Poren innerhalb der Gleitlagerfläche dienen hierbei als Ölrückhaltekammern, so daß im Moment des Motorstartes bzw.

Motorauslaufes und der beginnenden bzw. nachlassenden Rotation der Kurbelwelle, vermutlich durch Adhäsion des Motorenöles aus den Mikroporen mit der Kurbelwelle, noch ein ausreichendes Ölvolumen zur Gleitfilmbildung (Schwimmreibung) zur Verfügung steht, obwohl der Öldruck im Gleitlager bereits abgefallen ist bzw. erst aufgebaut werden muß. Durch das endungsgemäß vorhandene Mikrodruckkammersystem kann der Bereich der Mischreibung wesentlich verkürzt werden. Hierdurch werden auch die Notlaufeigenschaften des Lagers, ohne Einbringung von zusätzlichen Gleitlagerstoffen wie Blei-, Zinn- oder Nickellegierungen o.ä. wesentlich erhöht. Vorteilhaft wird die Größe der Poren und das Porenvolumen je nach Lagerbelastung der Gleitoberfläche beim thermischen Spritzen eingestellt. Üblicherweise befindet sich der überwiegende Teil des Porenvolumens in Poren der Größe 0,2 bis 250 µm, insbesondere 1 bis 50 µm.

Der übliche Ablauf bei der Herstellung der erfindungsgemäßen Lagerschicht ist wie folgt: Zuerst wird die zu beschichtende Substratoberfläche (beispielsweise das große Pleuelauge) gereinigt, insbesondere von Fett befreit. Dies erfolgt beispielsweise mittels Heißdampf. Anschließend wird die Substratoberfläche sandgestrahlt, beispielsweise mit Al₂O₃, auch SiO₂ bzw. SiC sind einsetzbar. Der Strahldruck liegt vorteilhaft bei 3 bis 8 bar und insbesondere bei 4 bis 6 bar, wobei mit unterschiedlichen Körnungen gearbeitet wird. Vorteilhaft wird hierbei eine ansteigende Körnung (gröber werdende Sieblinien) eingesetzt, d.h. zunächst wird mit einem feineren Korn und dann mit einem gröberen Korn sandgestrahlt. Ganz besonders vorteilhaft werden mindestens drei unterschiedliche Körnungen (gröber werdende Sieblinien) eingesetzt. Die Körnungen liegen hierbei im üblichen mesh-Bereich, wobei für die feine Körnung vorteilhaft mesh 80 und kleiner, insbesondere mesh 100 bis mesh 230 eingesetzt wird. Für die mittlere Körnung wird vorteilhaft eine Korngröße mit mesh 100 oder größer, insbesondere bis mesh 40 und besonders vorteilhaft mesh 80 bis mesh 45 eingesetzt. Für die grobe Körnung kommt vorteilhaft ein Korn mit mesh 45 oder größer und insbesondere mesh 30 oder größer zum Einsatz, vorteilhaft bis mesh 16 (600 µm bis 1,18 mm Standardsiebgröße).

Mit den unterschiedlichen Körnungen beim Sandstrahlen erreicht man auch im Bereich einer Kerbe, beispielsweise einer Bruchkerbe oder einer Nut, eine gute Oberflächenrauhigkeit, wobei im glatten Bereich eine Oberflächenstruktur mit einer Mittenrauhtiefe RA von ca. 5 bis 10 µm und insbesondere 6,5 bis 8 µm erzielt wird, bei RZ ca. 35 bis 60 µm und insbesondere 42 bis 54 µm. Mit solchen Sandstrahlrauhigkeiten wird eine besonders gute Haftzugfestigkeit der thermisch gespritzten Schicht auf dem Pleuel erreicht.

Anschließend erfolgt eine Plasmabeschichtung, beispielsweise mit einer AlCuFe-Legierung (Aluminiumbronze). Vorzugsweise wird die thermisch gespritzte Lagerschicht mit einer steigenden Porosität hergestellt (alternativ oder zusätzlich können auch andere temperatursenkende Maßnahmen während des thermischen Spritzens zum Einsatz kommen), wobei als erstes eine Schicht mit einer geringen Porosität (≤ 2 %, insbesondere ≤ 1 %) hergestellt wird. Hierfür eignet sich beispielsweise eine Pulverkorngröße um 38 µm (400 mesh). Diese untere Beschichtung wird in einer Schichtdicke von ca. 100 bis 300 µm, insbesondere 200 bis 250 µm, hergestellt. Hierauf wird dann eine Schicht mit einer Porosität von ca. 2 bis 6 %, insbesondere 2,5 bis 4 % erzeugt, wobei beispielsweise ein Pulverkorn der Größe um ca. 63 µm (mesh 230) eingesetzt wird. Die Pulverkorngröße ist hierbei so gewählt, daß mindestens 40 Gew.-%, insbesondere mindestens 50 Gew.-% des Pulvers kleiner oder gleich der Standardsiebgröße ist, vorteilhaft liegen mindestens 70 Gew.-% und insbesondere mindestens 80 Gew.-% innerhalb der nächsten Klasse und weiterhin liegen vorzugsweise mindestens 90 Gew.-% innerhalb des doppelten Durchmessers (halbe mesh-Größe).

Die Schichtdicke wird hierbei ebenfalls in dem für die untere Beschichtung angegebenen Bereich gewählt. Wenn nur eine Schicht gebildet wird, ist diese vorteilhaft 100 bis 600 µm, insbesondere 200 bis 400 µm dick.

Erfindungsgemäß hat es sich gezeigt, daß mit abnehmender Porosität die Schichteigenspannung steigt, wodurch die Gefahr des Ablösen der Schicht vom Pleuelauge besteht. Dem begegnet die vorliegende Erfindung insbesondere mit den speziellen Sandstrahlschritten, mit denen eine besonders hohe Haftfestigkeit der Schicht auf dem Pleuelauge erreicht wird. Zum anderen wird erfindungsgemäß ein Ablösen der Schicht durch zu hohe Schichteigenspannung dadurch verhindert, daß die Aufbringtemperatur der Schicht erhöht wird. Dies geschieht beispielsweise durch Erhöhung der Spannung bzw. des Stroms an einem Plasmabrenner. Hierdurch wird die Schicht besser auf dem Substrat (Pleuelauge) verteilt und eine bessere Haftung erreicht. Dies geschieht vorteilhaft nur in dem Maße, daß die aufgebrachte Schicht noch eine gewisse geringe Porosität hat, wie sie oben beschrieben ist. Andererseits bringt die Erhöhung der Aufbringtemperatur auch die Gefahr des Ausglühens des Substrats mit sich, das heißt das Substrat kann überhitzt werden. Dies ist insbesondere bei Eisenwerkstoffen problematisch. Dem wird erfindungsgemäß wiederum dadurch begegnet, daß nur eine untere Schicht mit der hohen Aufbringtemperatur abgeschieden wird. Der weitere Schichtaufbau erfolgt dann kälter und insbesondere mit einer höheren Porosität. Wenn diese höhere Porosität für das gewünschte Gleitlager ungeeignet ist, ist dies erfindungsgemäß unproblematisch, wenn diese höher poröse Schicht bei der anschließenden Bearbeitung abgetragen wird. In diesem Fall dient die höher poröse Schicht bzw. die kälter aufgetragene Schicht nur der Substratgewinnung für eine mechanische Nachbearbeitung.

Der Auftrag der Lagerschichten erfolgt vorzugsweise in einem Arbeitsgang, d.h. der Beschichtungsablauf wird nicht unterbrochen. Hierzu erfolgt vorteilhaft eine automatische Pulver- und/oder Parameteranpassung, um die unterschiedlichen Porositäten zu erreichen.

Die untere Lagerschicht deckt vorteilhaft die Unrundheit, die beispielsweise durch das Cracken des Pleuels beim Aufbrechen der Lagerschale entsteht (typische Unrundheit 30 bis 150 µm) ab, und kann zur Erreichung einer für eine spätere Nachbearbeitung genügenden Dicke mit weiteren, insbesondere poröseren Schichten, die verfahrenstechnisch einfacher auf das Lagermaterial des Pleuels aufgebracht werden können, abgedeckt werden. Diese Schicht wiederum kann ohne größere Probleme bis in die eigentliche Gleitlagerschicht (gering poröse Schicht) abgetragen werden. Durch diese Verfahrensweise erreicht man einen Ausgleich der Schichteigenspannung, kein oder nur geringes Ausglühen des Pleuels und hohe Haftzugfestigkeiten der Gleitlagerschicht, die üblicherweise ≥ 20 N/mm² und insbesondere ≥ 25 N/mm² liegen. Auch Haftzugfestigkeiten oberhalb 28 N/mm² sind möglich. Mit Aluminiumbronze läßt sich beispielsweise eine Schichthärte von ca. 185 HV_{0,3} und höher erreichen.

Für höherbelastete Gleitlagerschichten im Pleuel, insbesondere dem großen Pleuelauge, wie sie vorwiegend bei Dieselmotoren vorliegen, ist es vorteilhaft, die Restölmenge innerhalb der Gleitlagerschicht zu erhöhen. Dies erfolgt erfindungsgemäß durch eine Vergrößerung des Ölrückhaltevolumens bei Motorstillstand bzw. bei einer Motordrehzahl unterhalb der Leerlaufdrehzahl durch Einbringen einer oder mehrerer Schmiernuten in die Gleitlagerschicht. Hierdurch wird beim Motorstart oder Motorauslauf der Bereich der Mischreibung in einer kürzeren Zeit durchlaufen. Diese kürzere Zeit ist ein Resultat einer längeren Aufrechterhaltung bzw. schnelleren Bildung des Gleitfilms, der durch Adhäsion des Motoröles aus den Mikroporen und der oder den Nuten mit der Kurbelwelle resultiert. Durch das Einbringen mindestens einer Nut in die Lagerschicht, insbesondere mit einer etwas porösen Oberfläche, wird erreicht, daß der Schmierfilm "länger" hält, obwohl der Öldruck der Pumpe bereits abgefallen ist bzw. gerade aufgebaut wird. Besonders vorteilhaft ist der Nuteneffekt, wenn die Nuten überwiegend radial, d.h. in Umfangsrichtung, verlaufen. Besonders bevorzugt sind die Nuten dabei in sich geschlossen, d.h. eine Endlosnut und insbesondere eine ringförmige Endlosnut. Die Nut ist vorteilhaft in einer V- bzw. Trapezform ausgebildet, wobei die Seiten der Nut in einem Winkel von vorzugsweise 30 bis 80° und insbesondere 45 bis 60° zueinander stehen. Als Nuttiefe ist eine Tiefe im Bereich 0,2 bis 1 mm und insbesondere 0,4 bis 0,6 mm geeignet. Die Anzahl der Nuten richtet sich vorzugsweise nach der Gleitlagerbreite, dem Traganteil des Gleitlagers und dem erforderlichen zusätzlichen Ölrückhaltevolumen. Die angegebene Nutenform und -tiefe beziehen sich vorteilhaft auf den Zustand vor einer thermisch gespritzten Beschichtung. Als thermisch gespritzte Beschichtung kommt besonders bevorzugt das Plasmaspritzen zum Einsatz.

Vorzugsweise wird die Substratoberfläche nach dem Einbringen der einen oder mehreren Rillen mit der Gleitschicht beschichtet, insbesondere mit der Verbundlagerschicht mit unterschiedlicher Porosität, die oben beschrieben ist. Bei der anschließenden Nachbearbeitung der Lagerfläche werden vorzugsweise die Nuten nicht oder weniger nachgearbeitet, so daß die rauhe (Plasma-)Schichtstruktur eine besonders gute Ölrückhaltung bewirkt.

Bei dem Aufspritzen der Lagerschicht wird vorteilhaft ein Metall aufgespritzt, wobei bevorzugt Metallegierungen zum Einsatz kommen. Weiterhin kommt bevorzugt ein Gemisch verschiedener Metalle (insbesondere Metallegierungen) zum Einsatz. Ein solches Gemisch kann beispielsweise eine Mischung aus Aluminium und Zinn sein, wobei die Mischung besonders vorteilhaft durch Mischen der einzelnen Komponenten in Pulverform erhalten wird. Die Klassifikation des Metallpulvers ist u.a. von den einzelnen Spritzparametern abhängig und kann von dem Fachmann durch Versuchsreihen leicht ermittelt werden. Als Lagerwerkstoffe werden vorteilhaft eingesetzt Bronzen, insbesondere Aluminiumbronze (Aluminium/Zinn), aber auch Kupferbronze sowie auch Metall-Weichstoff-Schichten und/oder Metall-Festschmierstoff-Schichten. Als Weichstoff kommen beispielsweise weiche Metalle, wie Blei zum Einsatz, die in einem härteren Metall, wie beispielsweise legiertem Aluminium (Aluminium/Kupfer/Magnesium/Chrom) verteilt sind. Als Weichstoffe können aber auch andere Materialien, wie beispielsweise Fluorpolymere (z. B. Polytetrafluorethylen) eingesetzt werden. Als Festschmierstoff eignen sich beispielsweise Verbindungen wie Molybdändisulfid, Bornitrit oder Graphit.

Besonders vorteilhaft wird der Lagerwerkstoff mit Übermaß aufgespritzt, das anschließend mechanisch nachbearbeitet wird. Zum Nacharbeiten kommt beispielsweise ein Honen zum Einsatz, insbesondere ist hier Feinspindeln geeignet. Beim Honen werden bevorzugt 20 bis 300 µm und insbesondere 50 bis 200 µm des Lagerwerkstoffes abgetragen; beim Feinspindeln beträgt das Übermaß vorteilhaft 50 bis 1 000 µm und insbesondere 100 bis 500 µm.

Die fertige Lagerschicht (nach dem Abtragen des Übermaßes) beträgt vorzugsweise 150 bis 800 µm und insbesondere 200 bis 500 µm. Eine solche Schicht ist erheblich dünner als die üblichen Lagerschalen, deren Dicke im Bereich 2,5 mm liegt. Dies bedeutet, daß am Pleuel entweder mehr Material bestehen bleibt (höhere Belastung möglich), oder daß die Pleuel mit einem geringeren Gewicht hergestellt werden können.

Erfindungsgemäß kann das Pleuelauge, das mit dem Lagerwerkstoff durch thermisches Spritzen beschichtet wird, vorteilhaft erst nach dem Aufbringen des Lagerwerkstoffes geöffnet werden. Diese Verfahrensweise kommt besonders dann zum Einsatz, wenn das Pleuelauge aufgebrochen (gecrackt) wird. Bei diesem Verfahren wird das Pleuelauge (innen) mit je einer Kerbe an den gewünschten Bruchstellen verstehen. Die Kerben werden besonders vorteilhaft mittels eines Lasers eingebracht, wobei beispielsweise ein FK-Laser unter ca. 45° in das Pleuelauge eingefahren wird. Als Laserteistung kommen insbesondere 5 bis 10 kW zum Einsatz. Die Kerbe wird vorteilhaft in einer Breite von 0,3 bis 0,8 mm und in einer Tiefe von 0,2 bis 0,7 mm eingebracht. Die Bruchstelle sitzt üblicherweise in etwa mittig in dem Pleuelauge. Alternativ kann die Kerbe auch durch Erodieren oder über ein Räumwerkzeug, beispielsweise durch Stoßen, eingebracht werden.

Beim Kerben und Brechen des Pleuelauges erfolgt der Verfahrensablauf vorteilhaft derart, daß zuerst das Pleuelauge gekerbt (z.B. mit einem Werkzeug, Laser oder durch Erodieren) wird, dann wird der Lagerwerkstoff durch thermisches Spritzen aufgebracht und anschließend erfolgt das Brechen. Durch diese Verfahrensweise entfällt der Spalt (bzw. wird minimiert) der sonst an der Bruchstelle bzw. zwischen den einzelnen Lagerschalen besteht. Ein solcher Spalt fördert bei einer hohen Motorbelastung den Abriß des Ölfilms. Durch die Verfahrensweise des Kerbens vor dem Beschichten des Lagerwerkstoffes erreicht man bessere Schmiereigenschaften. Unter Umständen kann auch ein Brechen vor dem Beschichten des Lagerwerkstoffes erfolgen, der dann anschließend nochmal (bevorzugt ohne Kerbung) gebrochen wird.
Wenn das Pleuelauge durch Aufschneiden geöffnet wird, erfolgt dies vorzugsweise vor dem Aufbringen des Lagerwerkstoffes durch thermisches Spritzen. Bei dieser Verfahrensweise wird das Pleuelauge aufgeschnitten und die Trennflächen der verbliebenen Pleuelstange und des Pleueldeckels werden einzeln glatt geräumt. Die Teile werden anschließend wieder zusammengesetzt, mit Bohrungen und Gewinden versehen und zusammengeschraubt. Vorteilhaft wird in das wieder zusammengeschraubte Pleuelauge auch hier eine Kerbe (an der Trennstelle) eingebracht, insbesondere vor dem Beschichten mit dem Lagerwerkstoff. Anschließend wird das Pleuelauge zur Trennung der Lagerschicht vorteilhaft wieder aufgebrochen. Wenn das Brechen hierbei zu ungleichmäßig erfolgt, muß die Lagerschicht selbst gekerbt werden.

Das oben beschriebene Bearbeiten der Lagerschicht (Honen oder Spindeln) erfolgt besonders vorteilhaft erst nach dem Öffnen des Pleuelauges. Hierdurch wird ein eventuell beim Brechen der Lagerschicht entstehender Grat an der Bruchkante gleichzeitig mit der Entfernung des Übermaßes entfernt.

In das erfindungsgemäß hergestellte Pleuel kann auch ein Ölkanal in das Pleuelauge eingebracht werden. Dieser Ölkanal wird vorteilhaft erst nach dem Aufbringeri der Lagerschicht und insbesondere nach deren Nachbearbeitung in das Pleuelauge gebohrt. Der Ölkanal kann hierbei auch durch die Pleuelstange hindurch zu dem gegenüberliegenden Pleuelauge gebohrt werden.

Erfindungsgemäß werden auch die Planflächen (große Seitenflächen) des Pleuels vorteilhaft erst nach dem Aufbringen der Lagerschicht nachgearbeitet. Die Nachbearbeitung erfolgt hier vorzugsweise durch Schleifen der Planflächen.

Bei dem erfindungsgemäßen Verfahren wird dem Beschichten vorteilhaft ein Arbeitsschritt vorgeschaltet, in dem das Pleuelauge aufgerauht wird. Besonders vorteilhaft erfolgt das Aufrauhen durch Sandstrahlen, es ist jedoch auch ein Strahlen mit einer unter hohem Druck stehenden Flüssigkeit möglich. Das Material des Auges, insbesondere ein C 70 Stahl , wird hierbei vorteilhaft auf eine Mittenrauhtiefe Rₐ von 4 bis 30 µm, insbesondere 8 bis 12 µm aufgerauht. Bei solchen Mittenrauhtiefen wird eine besonders gute Haftung des Lagerwerkstoffes auf dem Material des Pleuelauges erreicht.

Für eine besonders vorteilhafte Fertigung der Lagerschicht in dem Pleuelauge wird mindestens eine der Planflächen des Pleuelauges mit einer Schablone abgedeckt, die eine Öffnung im Bereich des Pleuelauges aufweist. Diese Öffnung soll in etwa gleich groß sein wie das Pleuelauge, so daß der Beschichtungsvorgang durch die Schablone zum einen nicht gestört wird und zum anderen eine Beschichtung der Planfläche im Bereich des Pleuelauges weitgehend vermieden wird. Wenn nur eine Planfläche mit der Schablone abgedeckt wird, dann liegt die andere Planfläche vorteilhaft auf einer Palette, die im Bereich des Pleuelauges ebenfalls eine Öffnung, wie die Schablone, aufweist.

Erfindungsgemäß werden die Pleuelaugen einzelner Pleuel vorteilhaft in einem Arbeitsgang beschichtet. Hierzu liegen mehrere Pleuel, vorteilhaft 2 bis 10 und insbesondere 4 bis 8 derart übereinander, daß die zu beschichtenden Pleuelaugen einen Zylinder bilden. Hierzu kann auf einer Spezialpalette eine die Pleuel zentrierende Halterung vorgesehen sein, in die die Pleuel eingelegt werden. Vorteilhaft werden die bei diesem Verfahren praktisch gleichzeitig beschichteten Pleuel als Gruppe beibehalten, um anschließend in einer Verbrennungskraftmaschine gemeinsam verbaut zu werden. Vorteilhaft werden alle (gleichartigen) Pleuel einer Verbrennungskraftmaschine durch Übereinanderlegen gemeinsam beschichtet. Wenn dies wegen der Anzahl der Zylinder (beispielsweise 12-Zylinder) konstruktiv nicht möglich ist, dann werden zumindest die Pleuel einer Zylinderreihe (6 beim V 12-Motor) übereinanderliegend beschichtet. Mit dieser Verfahrensweise wird erreicht, daß Pleuel gleicher Qualität in einer Verbrennungskraftmaschine verbaut werden.

Während des thermischen Spitzens wird besonders vorteilhaft ein Gasstrom durch das Pleuelauge hindurchgeführt, insbesondere wenn mehrere Pleuel übereinanderliegend beschichtet werden. Als Gasstrom eignet sich insbesondere Luft, die konditioniert und gereinigt wird. Insbesondere soll der Luftstrom praktisch frei von Fett und Feuchtigkeit sein und möglichst in einem vorgegebenen Temperaturbereich (um ca. 20 °C) liegen. Der Luftstrom hat vorteilhaft eine Strömungsgeschwindigkeit (Luftsinkgeschwindigkeit) von 3 bis 15 m/s und insbesondere 5 bis 8 m/s. Mit dem Gasstrom wird ein beim Spritzen entstehender Overspray weggeblasen.

Das Spritzen des Lagerwerkstoffes erfolgt vorzugsweise mit einer rotierenden Spritzdüse, die insbesondere bereits oberhalb des Pleuelauges rotierend in das Pleuelauge (bzw. die Pleuelaugen) eingefahren wird. Mit einer solchen Spritzdüse wird eine besonders gleichmäßige Beschichtung im Pleuelauge erreicht. Die Spritzdüse wird bei dem erfindungsgemäßen Beschichten des Pleuelauges mit einem Vorschub von vorzugsweise 0,5 bis 20 mm/s, insbesondere 2 bis 8 mm/s in das Plasmaauge hinein und durch dieses hindurchgeführt.

Beim Spritzauftrag werden besonders bevorzugt mehrere Schichten des Lagerwerkstoffes auf dem Pleuelauge aufgetragen, wobei insbesondere 4 bis 30 Schichten in dem Pleuelauge gebildet werden. Die Schichten werden dabei vorteilhaft in unterschiedlichen Richtungen aufgetragen, was wiederum der Verbesserung der Schichtqualität dient. Dies wird beim Pleuelauge dadurch erreicht, daß die Spritzdüse das Pleuelauge während des Hineinfahrens und während des Hinausfahrens beschichtet, wobei eine rotierende Spritzdüse vorzugsweise ihre Rotationsrichtung beibehält.

Erfindungsgemäß werden die Pleuel in einer Serienfertigung mit dem Lagerwerkstoff beschichtet. Hierbei ist es vorteilhaft, wenn zumindest einzelne Pleuel der Serie vermessen werden. Vermessen wird hierbei insbesondere die Mittenrauhtiefe Rₐ und/oder der Lagerwerkstoff selbst (z. B. die Gleichmäßigkeit der Verteilung des Lagerwerkstoffes beim Einsatz eines Gemisches). Besonders bevorzugt erfolgt das Vermessen der Pleuel zerstörungsfrei.
Die oben und im folgenden beschriebenen Merkmale und Maßnahmen gelten gleichermaßen für die erfindungsgemäßen Verfahren wie Pleuel.

Die Erfindung wird im folgenden anhand von Zeichnungen und Ausführungsbeispielen näher beschrieben.

Es zeigen:
- Figur 1: ein Pleuel in Frontansicht;
- Figur 2: das Pleuel in Seitenansicht;
- Figur 3: einen Schichtaufbau in dem großen Pleuelauge;
- Figur 4: einen Pleueldeckel mit einem Kurbelwellenlagerzapfen und mikroporöser Lagerschicht;
- Figur 5: den Pleueldeckel aus Figur 4 mit einer Radialschmiernut;
- Figur 6: einen Pleueldeckel mit mehreren Radialschmiernuten;
- Figur 7: einen Plasmabrenner in einem Pleuelauge; und

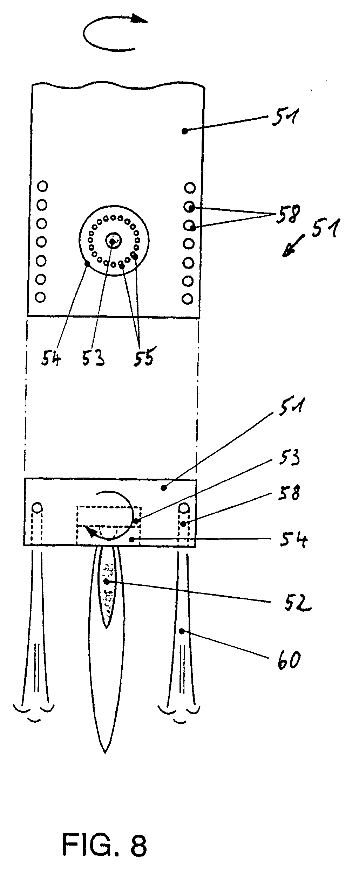

- Figur 8: den Plasmabrenner aus Figur 7 in Frontansicht und Draufsicht.

Die aufgeführten Verfahrensschritte sind nur zum Teil zwangsgekoppelt. Grundsätzlich können einzelne Verfahrensschritte weggelassen, ergänzt, alternativ ausgeführt und/oder mit anderen vertauscht werden.

### Fertigungsablauf Crackpleuel

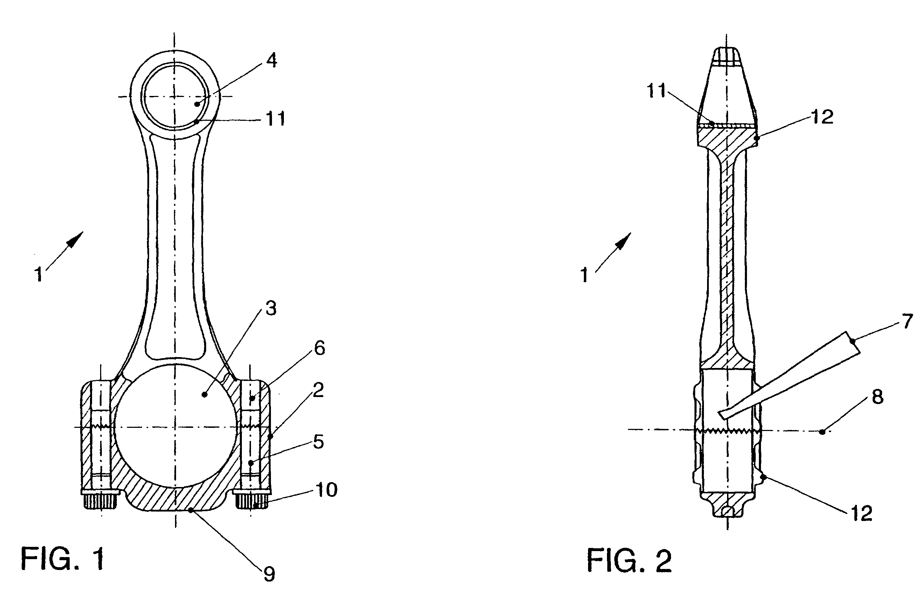

Übliche Pleuel 1 (Fig. 1 und 2), wie sie beispielsweise bisher mit Lagerschalen versehen wurden, z. B. aus C 70 Stahl, werden auf eine Fertigungsstraße gelegt. Hieran schließt sich das Vorschleifen der Seitenflächen 2 an. Anschließend werden das große und das kleine Pleuelauge 3,4 vorbearbeitet, d. h. auf Maß gebracht. Dies erfolgt vorteilhaft durch Spindeln. Außerdem erfolgt die Schraublochbearbeitung für den Pleueldeckel 9 in den Seitenflächen 2, d. h. es werden Bohrungen 5 und Gewinde 6 eingebracht.

Zur Vorbereitung des Crackens wird in das große Pleuelauge 3 ein FK-Laser 7 unter einem Winkel von 45° eingefahren. Mittels des Lasers 7 wird beidseitig und mittig in das große Pleuelauge 3 je eine Kerbe 8 in einer Breite von ca. 0,5 mm und einer Tiefe von ca. 0,3 bis 0,5 mm eingebrannt. Alternativ kann die Kerbe auch über ein Räumwerkzeug eingebracht werden.

Nachdem die Kerben 8 eingebracht wurden, wird das große Pleuelauge 3, wie weiter unten beschrieben, plasmabeschichtet. Nach dem Auftrag der Plasmaschicht wird das große Pleuelauge 3 zusammen mit der Plasmaschicht über eine Brechvorrichtung mit einer Brechkraft von ca. 100 kN gecrackt. Die Bruchstelle wird gereinigt (mit Druckluft abgeblasen) und der abgebrochene Pleuellagerdeckel 9 mit Schrauben 10 mit dem vorgesehenen Drehmoment montiert. Auch das kleine Pleuelauge wird durch Einpressen einer Buchse 11 montiert. Danach werden die Planflächen 12 fertiggeschliffen.

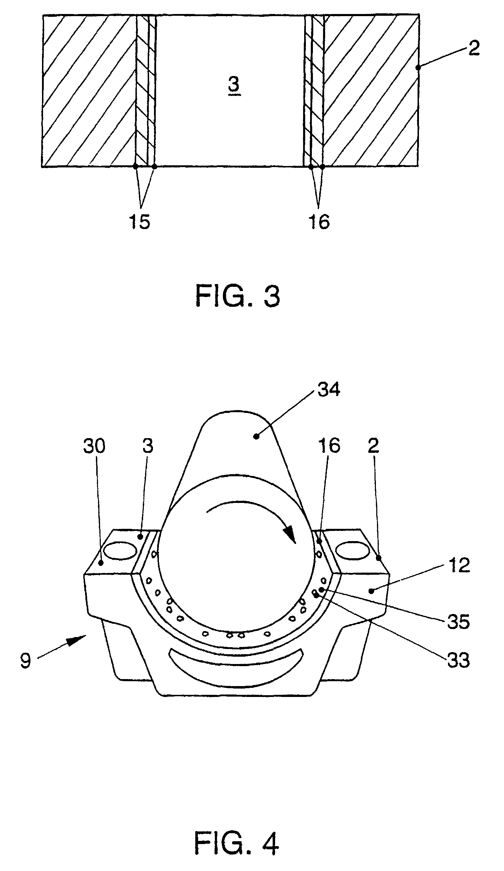

Das große Pleuelauge 3 und ggf. auch das kleine Pleuelauge 4 werden nun auf Maß 16 (Fig. 3) gebracht. Dies geschieht durch Feinbohren bzw. Feinspindeln. Anschließend wird das Pleuel einer kompletten Reinigung unterzogen, vermessen und klassiert.

### Fertigungsablauf geschnittenes Pleuel

Der Fertigungsablauf für ein geschnittenes Pleuel ist im wesentlichen mit dem oben beschriebenen Ablauf gleich, es wird jedoch das Pleuelauge bereits nach dem Räumen der Seitenflächen, der Kopfflächen und Schraubenauflagen durch Aufschneiden getrennt. Nach dem Aufschneiden werden die Trennflächen auf der Pleuelstange und dem Pleueldeckel einzeln geräumt. Hieran schließt sich ein Waschschritt an, nach dem das kleine Pleuelauge vor- und fertigbearbeitet wird. Nun werden die Deckelschrauben durch Einbringen von Bohrungen und Gewinden in die Seitenflächen eingebracht. Die Trennflächen an Pleuelstange und Pleueldeckel werden fertiggeschliffen. nochmal gewaschen und der Pleueldeckel auf die Pleuelstange montiert. Anschließend wird das Pleuelauge auf die Beschichtungstoleranz gebohrt (Spindeln). Die Schnittfläche wird wieder mit einem FK-Laser gekerbt und anschließend wird das große Pleuelauge mit der Lagerschicht versehen, die anschließend wieder gebrochen wird.

Einzelne Fertigungsschritte, wie beispielsweise das Einpressen der Lagerschale 11 in das kleine Pleuelauge 4 können an unterschiedlichen Stellen des Gesamtablaufs erfolgen, beispielsweise auch bereits vor der Plasmabeschichtung.

### Aufbau des Plasmabrenners

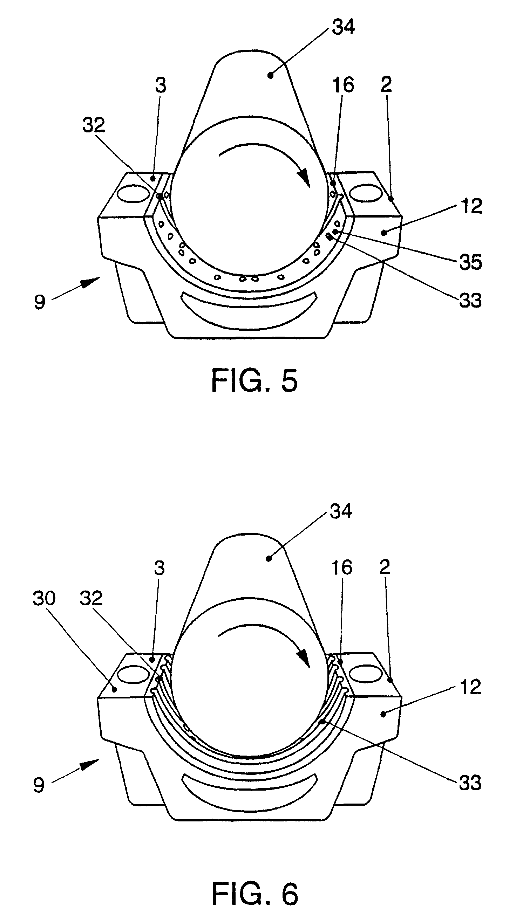

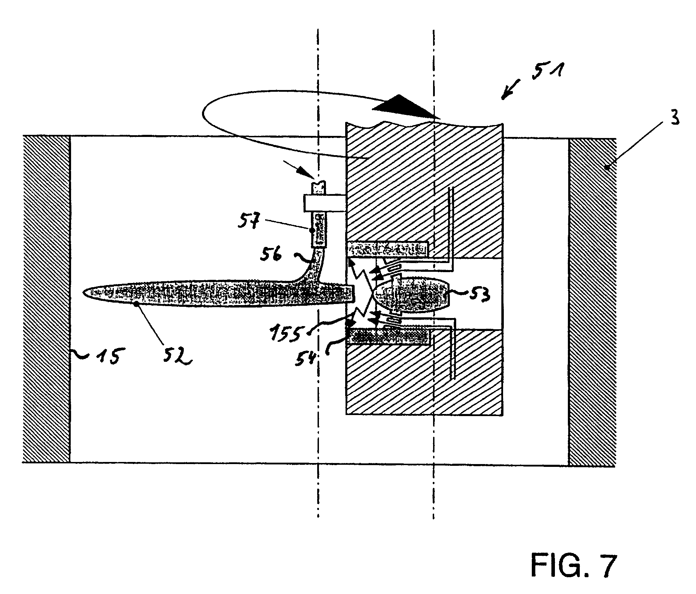

Zur Innenbeschichtung von Hohlräumen wird ein Brenner 51 (Figuren 6 und 7) eingesetzt, der drehbar aufgehängt ist, so daß seine Flamme 52 einen Kreis beschreibt. Die Drehachse wird dabei so gelegt, daß die Flamme 52 einen optimalen Abstand zum Pleuelauge 3 hat. Der Brenner 51 ist ein Plasmabrenner, der um eine Kathode 53 eine ringförmige Anode 54 aufweist, zwischen denen eine Entladung 155 stattfindet. Weiterhin hat der Brenner 51 zwischen Kathode 53 und Anode 54 Ausströmöffnungen 55 angeordnet, durch die ein Plasmagas, beispielsweise Wasserstoff mit Argon als Trägergas, strömt. Das Plasmagas wird durch die Entladung 55 gezündet und bildet die Flamme 52, in die über eine Pulverzuführung 57 ein Metallpulver 56 zusammen mit Argon als Trägergas eingeschleust wird. In der Flamme 52 herrscht eine Temperatur von ca. 20.000 °C. Das Metallpulver wird als die Plasmaschicht 15 abgeschieden. Um das gesamte Pleuelauge 3, von denen mehrere übereinander liegen können, zu beschichten, ist der Brenner 51 außerdem nach oben bzw. unten verfahrbar. Vorzugsweise beschreibt der Brenner 51 mehrfach eine Spirale in dem Pleuelauge 3.

Weiterhin sind in dem Brenner 51 Gasaustrittsöffnungen 58 vorgesehen, durch die ein Gas 60 zur Kühlung des Brenners 51 und zur Lenkung der Flamme 52 strömt, die ohne diese Gaszufuhr aufgrund der Rotationsgeschwindigkeit des Brenner 51 (ca. 200 U/min) zu sehr gebogen wäre.

Durch das Strömen eines Gases 60 durch die Austrittsöffnungen 58, das einen Sauerstoffgehalt unter dem von Luft hat, erreicht man eine Reduzierung der Oxidbildung des Metallpulvers 56 und entsprechend in der Beschichtung 15. Beim Einsatz von Stickstoff (> 99 %) wird die Oxidbildung in der Beschichtung um ca. 50 % gesenkt. Hierdurch erreicht man insbesondere eine Verringerung von Oxidanhäufungen der Beschichtung, so daß man eine feinere Verteilung der Poren und der Oxidporen bekommt. Außerdem werden negative Wirkungen von Mikroturbulenzen an der Flamme 52 während der Beschichtung in dem rohrähnlichen Bauteil stark reduziert. Gleichzeitig reduziert sich jedoch auch durch den verringerten Anteil an Oxidanhäufungen die Mikrohärte der Beschichtung 16 geringfügig. Eine visuelle Ermittlung des Gesamtporositätsgehalt zeigt keine signifikanten Unterschiede mit Ausnahme der bereits erwähnten Verringerung von oxidreichen Zonen (Oxidclustern).

### Fertigungsablauf Plasmabeschichtung des großen Pleuelauges

Für die Plasmabeschichtung werden die Pleuel gewaschen und das große Pleuelauge mit Heißdampf entfettet, danach praktisch Restfeuchte frei getrocknet. Die so vorbehandelten Pleuel werden zu 4 bis 8 Stück übereinander gestapelt, so daß die großen Pleuelaugen konzentrisch auf einer entsprechenden Öffnung einer Spezialpalette liegen. Die Pleuel werden dabei vorteilhaft über das vorbearbeitete kleine Pleuelauge und die Pleuelstange bzw. Seitenflächen ausgerichtet und fixiert. Die beladenen Paletten gelangen über eine Bereitstellzone in eine Sandstrahleinheit, in der das große Pleuelauge durch Sandstrahlen auf eine Mittenrauhtiefe Rₐ von ca. 8 bis 12 µm gebracht wird. Anschließend werden die Pleuel in eine Reinigungsstation gefahren und die gestrahlte Oberfläche mit Druckluft ab- bzw. ausgeblasen. Die vorbehandelten Pleuel fahren schließlich in die Plasmastation, in der das große Pleuelauge mit einem rotierenden Plasmabrenner in einer Schichtdicke 15 von ca. 0,5 mm mit einer Aluminiumbronze beschichtet wird (Fig. 3). Die beschichteten Pleuel kommen danach in eine Kühlzone, von der die abgekühlten Pleuel von der Spezialpalette entnommen und der oben beschriebenen Weiterbearbeitung zugeführt werden.

Die erfindungsgemäß hergestellten Pleuel haben den Vorteil, daß sie im großen Pleuelauge keine Lagerschale enthalten, somit entfällt auch die Lagerschalenmontage selbst sowie das Einbringen von Haltenuten bzw. das Entgraten der Lagerschalen. Hierdurch wird das Aufbringen der Plasmaschicht kostenmäßig wettbewerbsfähig. Außerdem ist bei den plasmabeschichteten Pleueln die Montagesicherheit erhöht, da keine Lagerschalen bei der Montage ausgelassen werden können.

Die erfindungsgemäßen Pleuel haben am großen Pleuelauge eine größere Stegbreite im Bereich der Lagerdeckelbefestigung, da die Plasmaschicht nach der Nachbearbeitung nur ca. 0,3 mm dick ist, eine Lagerschale jedoch 2,5 mm aufträgt. Hierdurch ist eine höhere Pleuelbelastung für höherbelastete Motoren und/oder eine Gewichtsersparnis möglich. Außerdem entfällt der Spalt zwischen zwei Lagerschalenhälften, an dem bei einer höheren Belastung der Ölfilm abzureißen beginnt. Die erfindungsgemäß hergestellten Pleuel haben somit bessere Schmiereigenschaften.

### Applikationsablauf

Wie bei den oben beschriebenen Fertigungsabläufen beschrieben, kann die Reinigung der zu beschichtenden und mit Radialnuten versehenen Oberfläche mit Heißdampf erfolgen. Hierbei wird eine praktisch 100 %ige Fettfreiheit erreicht. Das Aufrauhen der Substratoberfläche (Eisenwerkstoff, z.B. C 70) erfolgt durch eine mehrfache Sandstrahlbehandlung mit Al₂O₃ bei ca. 4 bis 6 bar Strahldruck und mit aufsteigender Körnung: Eine erste Strahloperation für die erodierte Bruchkerbe beim Crackpleuel oder beschnittenem Pleuel mit einer Körnung Ø 0,063 bis 0,15 mm (230 bis 100 mesh). Eine zweite Strahloperation für die Substratoberfläche und die Radialnut mit einer Körnung Ø 0,18 bis 0,35 mm (80 bis 45 mesh) und eine dritte Strahloperation für die Substratoberfläche und die Radialnut mit einer Körnung von Ø 0,6 bis 1,1 mm (30 bis 16 mesh). Als weiterer Arbeitsschritt schließt sich die Plasmabeschichtung mit einer Aluminium-Kupfer-Eisen-Legierung an, wobei beispielsweise eine Alubronze mit 5 bis 15 % Aluminium, 1 bis 5 % Eisen, 1 bis 4 % Kobalt und 0,5 bis 4 % Mangan, insbesondere Aluminium 9 bis 12 %, Mangan ca. 2 %, Kobalt ca. 2 bis 2,5 % und Eisen ca. 3 bis 4 % zum Einsatzkommen kann. Es erfolgt eine erste Plasmabeschichtung mit einer Schichtdicke von ca. 200 bis 250 µm mit einer Pulverkorngröße des Beschichtungsmaterials von durchschnittlich ca. 38 µm, wobei mit den Auftragsparametern, bezogen auf den jeweils verwendeten Brenner, eine Porosität in der Schicht ≤ 1 % eingestellt wird. Ohne Unterbrechung wird mit einem etwas gröberen Pulverkorn (Ø ca. 65 µm) weiterbeschichtet, wobei wiederum eine Schichtdicke von 200 bis 250 µm gebildet wird. Die Anlagenparameter werden hierbei so eingestellt, daß eine Porosität im Bereich 1,5 bis 3,5 % erreicht wird.

Diese Art der Beschichtung kann auch bei Lagern ohne Radialnuten durchgeführt werden.

### Fertigungsablauf geschnittenes Pleuel mit Radialnuten

Im folgenden wird der gesamte Fertigungsablauf beschrieben, einzelne Arbeitsschritte können, wie bereits erwähnt, je nach Arbeitsplanung entfallen, vertauscht, ergänzt oder gegen andere ersetzt werden.

Nach der Anlieferung der Rohpleuel werden diese auf die Fertigungsstraße gelegt, auf der ein Vorschleifen und Räumen der Planflächen 12 erfolgt. Anschließend werden die Seitenflächen 2, Kopfflächen und Schraubenauflagen geräumt und das große Pleuelauge getrennt. Danach folgt ein Räumen der Trennflächen 30 und des großen Pleuelauges 3, wobei die Pleuelstange und der Pleueldeckel 9 einzeln bearbeitet werden. Nach dem Waschen der Teile wird das kleine Pleuelauge 4 vor- und fertigbearbeitet und für die Pleueldeckelschrauben 10 werden die Bohrungen und Gewinde geschnitten. In das kleine Pleuelauge 4 wird die Lagerbuchse 11 eingepreßt, angepreßt und gefast. Die Trennflächen 30 der Pleuelstange und des Pleueldeckels 9 werden fertiggeschliffen und das ganze nochmals gewaschen.

Hiernach wird der Pleueldeckel 9 auf der Pleuelstange auf das vorgesehene Drehmoment angezogen, das Pleuelauge auf die Beschichtungstoleranz gespindelt und - beim Einsatz von Radialnuten 32 - die Nuten in das große Pleuelauge eingebracht, beispielsweise durch Fräsen oder Drehen.

Für ein späteres Öffnen der Plasmaschicht 15 oder 16 wird eine Bruchkerbe in das große Pleuelauge eingebracht, beispielsweise durch Erodieren oder Lasern. Hieran schließt sich die Plasmabeschichtung des großen Pleuelauges an.

Bei Bedarf, je nach Pleuelart, kann ein Ölkanal (vom großen Pleuelauge bis zum kleinen Pleuelauge durch die Pleuelstange hindurch) gebohrt werden, dies kann bei Benzinmotoren erfolgen und erfolgt meistens bei Dieselbrennkraftmaschinen.

Die aufgetragene Plasmaschicht 15 wird durch Lösen der Pleueldeckelschrauben 10 gecrackt, dies erfolgt - je nach Plasmabeschichtung - oftmals bereits durch die Eigenspannung der Plasmaschicht 15. Der Pleueldeckel 9 wird abgenommen und die Bruchstelle gereinigt, beispielsweise durch Abblasen. Anschließend wird der Pleueldeckel 9 wieder montiert und die Pleueldeckelschrauben 10 auf Drehmoment angezogen. Das große Pleuelauge wird beidseitig gefast und, je nach Alternative, werden die Kanten der Radialnuten gebrochen (gerundet).

Hiernach werden die Planflächen 12 fertiggeschliffen, das kleine Pleuelauge 4 fertiggebohrt und das große Pleuelauge 3 fertiggespindelt zur Erzeugung der eigentlichen Lauffläche 35 und Freilegen der Microporen 33 auf der Lagerschicht 16. Nach einem weiteren Waschvorgang werden die Pleuel vermessen und klassifiziert, wobei bevorzugt zwei Toleranzklassen gewählt werden.

Die so hergestellten Pleuel werden an der Montagelinie demontiert und an der Montagelinie auf der Kurbelwelle 34 einer Brennkraftmaschine montiert.

Nach der Plasmabeschichtung des großen Pleuelauges und gegebenenfalls Bohren des Ölkanals kann auch bereits das große Pleuelauge beidseitig gefast werden und, je nach Alternative, das Brechen der radialen Nutenkanten erfolgen. Hieran schließt sich dann das Fertigschleifen der Planflächen an, das kleine Pleuelauge wird fertiggebohrt und das große Pleuelauge fertiggespindelt. Nach einem Waschen und Vermessen der Pleuel mit Klassifizierung erfolgt dann, insbesondere direkt an der Montagelinie, das Cracken der Plasmaschicht durch Lösen der Pleueldeckelschrauben. Der Pleueldeckel wird abgenommen und die Bruchstelle durch beispielsweise Abblasen gereinigt. Dann wird das Pleuel auf der Kurbelwelle der Brennkraftmaschine montiert.
Vorteilhaft wird im Pleuel eine Verdrehsicherung des Deckels vorgesehen, beispielsweise durch einen leichten Versatz der Pleueldeckelschrauben-Bohrungen, damit die beim Cracken in der Plasmaschicht entstehenden Zacken wieder identisch zueinander geführt werden.

### Fertigungsablauf Crackpleuel

Das Rohpleuel (Material beispielsweise C70) wird auf die Fertigungsstraße gelegt und vorgeschliffen, wobei die Seitenwangen plan geschliffen werden. Es erfolgt die Vorbearbeitung des großen und kleinen Pleuelauges und die Schraubenlochbearbeitung für den Lagerdeckel (Bohren und Gewindeschneiden) wie oben beschrieben. Je nach Lagerart werden gewünschtenfalls eine oder mehrere Radialnuten in das große Pleuelauge eingebracht, beispielsweise durch Fräsen oder Drehen. Anschließend wird das große Pleuelauge gekerbt, beispielsweise mit einem FK-Laser, der unter 45° in das große Pleuelauge eingefahren wird; Laserleistung ca. 7 kW. Hierbei wird beidseitig eine Kerbe von ca. knapp 2 mm Breite und knapp 0,5 mm Tiefe mittig in das große Pleuelauge eingebracht. Die Kerbe kann auch über ein Räumwerkzeug oder durch Erodieren eingebracht werden. Das Pleuelauge wird über eine Brechvorrichtung mit einer Brechkraft von ca. 100 kN gecrackt. Der Pleuellagerdeckel wird abgenommen und die Bruchstelle, beispielsweise durch Druckluft, gereinigt. Der Pleuellagerdeckel wird anschließend wieder montiert und die Pleuellagerdeckelschrauben auf Drehmoment angezogen. Danach wird das große Pleuelauge auf das Beschichtungsmaß gebohrt, gewaschen, plasmabeschichtet und in das kleine Pleuelauge die Lagerbuchse eingepreßt. Das große Pleuelauge wird beidseitig gefast, die Pleuelwangen werden fertiggeschliffen und das große und kleine Pleuelauge feingebohrt bzw. feingespindelt. Anschließend erfolgt eine komplette Reinigung (Waschen) und eine Vermessung und Klassifizierung des Pleuels. An der Montagelinie wird das Pleuel demontiert und auf die Kurbelwelle für eine Brennkraftmaschine montiert.

Das Cracken der Plasmaschicht, insbesondere durch Lösen der Pleueldeckelschrauben, kann direkt an der Montagelinie oder auch zu einem vorherigen Zeitpunkt erfolgen. Nach dem Cracken der Plasmaschicht ist es empfehlenswert die Pleueldeckelbruchstelle zu reinigen (abzublasen).

### Fertigungsablauf der Plasmabeschichtung

Das Pleuel wird gewaschen und zumindest das große Pleuelauge mit Heißdampf entfettet und anschließend auf einen möglichst niedrigen Restfeuchtegehalt getrocknet. Mehrere Pleuel werden auf einer Spezialpalette übereinander konzentrisch zum großen Pleuelauge gestapelt (in der Regel 4 bis 8 Pleuel). Die Fixierung kann hierbei über das kleine Pleuelauge und die Pleuelstange bzw. die Seitenflächen erfolgen. Die beladene Spezialpalette wird über eine Neutralzone in eine Sandstrahleinheit eingefahren und positioniert. Das große Pleuelauge wird mit den oben beschriebenen Sandklassifikationen auf eine Mittenrauhtiefe von ca. 6,5 bis 8 µm sandgestrahlt. Anschließend fährt die Spezialpalette mit den sandgestrahlten Pleueln in eine Reinigungsstation, in der die gestrahlte Oberfläche mit Druckluft abgeblasen bzw. ausgeblasen wird. Weiter fährt die Spezialpalette in die Plasmastation, in der das große Pleuelauge zuerst mit einer geringporösen und anschließend mit einer etwas poröseren Schicht aus Aluminiumbronze in einer Gesamtstärke von 0,5 mm plasmabeschichtet wird. Die beschichteten Pleuel fahren in eine Kühlzone, um nach dem Abkühlen von der Palette zur Weiterbearbeitung genommen zu werden.

Die vorliegende Erfindung hat den Vorteil, daß die Lagerschalen und deren Montage sowie die Haltenuten und das Entgraten hierfür entfallen kann. Hierdurch wird die Montagesicherheit erhöht. Durch die Plasmabeschichtung erhält man eine größere Stegbreite (kleinerer Pleuelaugen-Durchmesser) im Bereich der Lagerdeckelbefestigung, da der Lagerschalendicke von ca. 2,5 mm eine Plasmaschicht von weniger als 0,5 mm gegenübersteht. Hierdurch ist eine höhere Pleuelbelastung in höher belasteten Motoren bzw. eine gewisse Ersparnis möglich. Außerdem entfällt der Spalt zwischen zwei Lagerschalenhälften, der konstruktionsbedingt unter Umständen zu einem Ölfilmabriß führen kann. Mit der Plasmabeschichtung erreicht man bessere Schmiereigenschaften. Gleichzeitig werden die Toleranzen reduziert, da eine Toleranzklasse durch die Plasmabeschichtung entfällt. Hiermit erreicht man durch geringere Fertigungstoleranzen einen besseren Motorlauf. Durch den Einsatz von Radialnuten in der Plasmabeschichtung erreicht man eine höhere Lagerbelastung und eine Reduzierung der Mischreibungszeit. Das Mikrodruckkammersystem verbessert die Reibwerte, insbesondere in Kombination mit einer oder mehreren Nuten. Die Nuten können auch mit einem anderen Gleitlagermaterial beschichtet werden, das nach einer spanabhebenden Bearbeitung der Beschichtung im wesentlichen nur noch in den Nuten vorliegt. Solche Lagermaterialien können auf Basis Blei, Zinn oder auch Nickel sein. Auch hiermit werden höhere Lagerbelastungen bzw. Standzeiten möglich.

## Patentansprüche

1. Verfahren zum thermischen Beschichten einer Innenfläche, insbesondere eines Pleuelauges oder einer Zylinderwandung, mittels einer bewegten, insbesondere rotierenden Flamme, die von einem Brenner gebildet wird und die von einem nicht brennbaren Gasstrom flankiert wird, der einen Sauerstoffgehalt unter 18 Vol.-Prozent hat, wobei ein oxidierbarer Beschichtungswerkstoff beschleunigt, von der Flamme erhitzt und auf der Innenfläche der Beschichtung abgeschieden wird, **dadurch gekennzeichnet, dass** der nicht brennbare Gasstrom in Flammaustrittsrichtung neben der Flamme aus separaten, ausserhalb der Ausströmöffnungen des Brenners angeordneten Gasaustrittsöffnungen ausgeschleudert wird.

2. Verfahren zum Herstellen einer Beschichtung auf einer Innenfläche, insbesondere eines Pleuelauges oder einer Zylinderwandung, durch thermisches Spritzen, **dadurch gekennzeichnet, dass** auf einer thermisch gespritzten unteren Schicht durch thermisches Spritzen zumindest eine Schicht mit höherer Porosität aufgebracht wird.

3. Verfahren nach zumindest einem der vorhergehenden Ansprüche, **dadurch gekennzeichnet, dass** die Porosität der Beschichtung 0,2 bis 10%, insbesondere 0,5 bis 4% beträgt.

4. Verfahren nach zumindest einem der vorhergehenden Ansprüche, **dadurch gekennzeichnet, dass** durch Abtragen eines Teils der Beschichtung die Beschichtung auf eine durchschnittliche Gebrauchsstärke, vorzugsweise von 30 bis 800µm, insbesondere 60 bis 150µm gebracht wird.

5. Verfahren nach zumindest einem der vorhergehenden Ansprüche, **dadurch gekennzeichnet, dass** ein Abtrag von durchschnittlich 100 bis 400µm, insbesondere 150 bis 250µm, eines Teils der Beschichtung vorgesehen ist.

6. Verfahren nach zumindest einem der vorhergehenden Ansprüche, **dadurch gekennzeichnet, dass** die Beschichtung in einer Dicke vor einem Abtragen von 100 bis 600µm, insbesondere 150 bis 400µm, hergestellt wird.

7. Verfahren nach zumindest einem der vorhergehenden Ansprüche, **dadurch gekennzeichnet, dass** ein geringer Einschluss von Oxiden des Beschichtungswerkstoffes in der Beschichtung durch Einstellen eines geringen Sauerstoffgehalts in dem Gasstrom unterstützt wird.

8. Verfahren nach zumindest einem der vorhergehenden Ansprüche, **dadurch gekennzeichnet, dass** der Gasstrom als nicht brennbares Gas im wesentlichen Stickstoff und/oder Argon enthält.

9. Verfahren nach zumindest einem der vorhergehenden Ansprüche, **dadurch gekennzeichnet, dass** der Gasstrom ≥ 10 Vol.-% und insbesondere ≥ 5 Vol.-% Sauerstoff enthält.

10. Verfahren nach zumindest einem der vorhergehenden Ansprüche, **dadurch gekennzeichnet, dass** der die Flamme flankierende Gasstrom die Flamme richtet.

11. Verfahren nach zumindest einem der vorhergehenden Ansprüche, **dadurch gekennzeichnet, dass** die Innenfläche zylindrisch bzw. rohrförmig ist.

12. Verfahren nach zumindest einem der vorhergehenden Ansprüche, **dadurch gekennzeichnet, dass** die Beschichtung eine Porosität unter 7 %, insbesondere unter 3 % an der Oberfläche hat, incl. einer durch Oxide des Beschichtungswerkstoffes gebildete Porosität.

13. Verfahren nach zumindest einem der vorhergehenden Ansprüche, **dadurch gekennzeichnet, dass** der Durchmesser des Pleuelauges vor dem Aufbringen der Beschichtung mit einer Toleranz auf ein Nennmaß gearbeitet wird.

14. Verfahren nach zumindest einem der vorhergehenden Ansprüche, **dadurch gekennzeichnet, dass** eine spanabhebende Bearbeitung der Beschichtung erfolgt.

15. Verfahren nach zumindest einem der vorhergehenden Ansprüche, **dadurch gekennzeichnet, dass** das Pleuelauge gespindelt wird.

16. Verfahren nach zumindest einem der vorhergehenden Ansprüche, **dadurch gekennzeichnet, dass** das Abtragen der thermisch gespritzten Beschichtung spanabhebend erfolgt.

17. Verfahren nach zumindest einem der vorhergehenden Ansprüche, **dadurch gekennzeichnet, dass** die Innenfläche, insbesondere das Pleuelauge, vor dem Aufbringen der thermisch gespritzten Beschichtung mit einem Partikelstrahl aufgerauht wird.

18. Verfahren nach Anspruch 17, **dadurch gekennzeichnet, dass** das Pleuelauge auf eine Mittenrauhtiefe R_{A} von 4 bis 30µm, insbesondere 6 bis 12µm aufgerauht wird.

19. Verfahren nach zumindest einem der vorhergehenden Ansprüche, **dadurch gekennzeichnet, dass** die Beschichtung mittels Plasmaspritzen aufgebracht wird.

20. Verfahren nach zumindest einem der vorhergehenden Ansprüche, **dadurch gekennzeichnet, dass** als Beschichtung ein Metall, insbesondere eine Metalllegierung, aufgebracht wird.

21. Vorrichtung zum Plasmabeschichten mit einem Brenner mit Ausströmöffnungen für ein Plasmagas, durch welches eine Flamme bildbar ist, sowie mit einer Pulverzuführung für ein in die Flamme einzuschleusendes Metallpulver, **dadurch gekennzeichnet, dass** außerhalb der Ausströmöffnungen Gasaustrittsöffnungen vorgesehen sind, durch die parallel zur Achse der Flamme ein Gas, welches einen Sauerstoffgehalt unter dem von Luft hat, zur Lenkung und Kühlung der Flamme ausschleuderbar ist.

22. Vorrichtung nach Anspruch 21, **dadurch gekennzeichnet, dass** der Brenner beim Gebrauch von oben nach unten verfahrbar ist

23. Vorrichtung nach zumindest einem der Ansprüche 21 bis 22, **dadurch gekennzeichnet, dass** der Brenner drehbar aufgehängt ist.

24. Vorrichtung nach zumindest einem der Ansprüche 21 bis 23, **dadurch gekennzeichnet, dass** der Brenner bei Gebrauch eine Spirale beschreibt.

## Claims

1. Process for the thermal coating of an inner surface, in particular of a connecting-rod eye or of a cylinder wall, by means of a moving, in particular rotating flame, which is formed by a torch and is flanked by a noncombustible gas stream which has an oxygen content of less than 18% by volume, an oxidizable coating material being accelerated, heated by the flame and deposited on the inner surface of the coating, **characterized in that** the noncombustible gas stream, in the direction in which the flame emerges, is discharged next to the flame from separate gas-discharge openings arranged outside the outlet openings of the torch.

2. Process for producing a coating on an inner surface, in particular of a connecting-rod eye or a cylinder wall, by thermal spraying, **characterized in that** at least one layer with a higher porosity is applied by thermal spraying to a thermally sprayed lower layer.

3. Process according to at least one of the preceding claims, **characterized in that** the porosity of the coating is 0.2 to 10%, in particular 0.5 to 4%.

4. Process according to at least one of the preceding claims, **characterized in that** the coating is brought to an average use thickness, preferably from 30 to 800 µm, in particular 60 to 150 µm, as a result of part of the coating being removed.

5. Process according to at least one of the preceding claims, **characterized in that** it is provided for an average of from 100 to 400 µm, in particular 150 to 250 µm, to be removed as part of the coating.

6. Process according to at least one of the preceding claims, **characterized in that** the coating is produced in a thickness of from 100 to 600 µm, in particular 150 to 400 µm, prior to the removal.

7. Process according to at least one of the preceding claims, **characterized in that** a low level of inclusion of oxides of the coating material in the coating is assisted by setting a low oxygen content in the gas stream.

8. Process according to at least one of the preceding claims, **characterized in that** the gas stream substantially contains nitrogen and/or argon as noncombustible gas.

9. Process according to at least one of the preceding claims, **characterized in that** the gas stream contains ≥ 10% by volume, and in particular ≥ 5% by volume of oxygen.

10. Process according to at least one of the preceding claims, **characterized in that** the gas stream which flanks the flame directs the flame.

11. Process according to at least one of the preceding claims, **characterized in that** the inner surface is cylindrical or tubular.

12. Process according to at least one of the preceding claims, **characterized in that** the coating has a porosity of less than 7%, in particular less than 3%, at the surface, including a porosity formed by oxides of the coating material.

13. Process according to at least one of the preceding claims, **characterized in that** the diameter of the connecting-rod eye is machined to a nominal dimension with a tolerance prior to the application of the coating.

14. Process according to at least one of the preceding claims, **characterized in that** the coating is subjected to chip-forming machining.

15. Process according to at least one of the preceding claims, **characterized in that** the connecting-rod eye is spindle-formed.

16. Process according to at least one of the preceding claims, **characterized in that** the thermally sprayed coating is removed by a chip-forming process.

17. Process according to at least one of the preceding claims, **characterized in that** the inner surface, in particular the connecting-rod eye, is roughened by a particle beam before the thermally sprayed coating is applied.

18. Process according to Claim 17, **characterized in that** the connecting-rod eye is roughened to a roughness average R_{A} of from 4 to 30 µm, in particular 6 to 12 µm.

19. Process according to at least one of the preceding claims, **characterized in that** the coating is applied by means of plasma spraying.

20. Process according to at least one of the preceding claims, **characterized in that** a metal, in particular a metal alloy, is applied as the coating.

21. Device for plasma coating, having a torch (51) with outlet openings (55) for a plasma gas, which can be used to form a flame (52), and having a powder feed (57) for a metal powder which is to be thrown into the flame (52), **characterized in that** outside the outlet openings (55) there are gas-discharge openings (58), through which a gas which has an oxygen content below that of air, which flanks the flame (52) in order to guide and cool the flame, can be discharged parallel to the axis of the flame (52).

22. Device according to Claim 21, **characterized in that** the torch (51) can be moved from the top downwards during use.

23. Device according to at least one of Claims 21 to 22, **characterized in that** the torch is suspended rotatably (51).

24. Device according to at least one of Claims 21 to 23, **characterized in that** the torch (51) describes a spiral during use.

## Revendications

1. Procédé pour le revêtement thermique d'une surface intérieure, en particulier celle d'un oeil de bielle ou d'une paroi de cylindre, au moyen d'une flamme en mouvement, en particulier en rotation, qui est formée par un brûleur et qui est entourée d'un flux de gaz non combustible, qui a une teneur en oxygène inférieure à 18% en volume, un matériau de revêtement oxydable étant accéléré, réchauffé par la flamme et déposé sur la surface intérieure du revêtement, **caractérisé en ce que** le flux de gaz non combustible, dans le sens de sortie de la flamme à proximité de la flamme, est centrifugé hors des orifices de sortie de gaz séparés et disposés à l'extérieur des orifices d'écoulement du brûleur.

2. Procédé pour la réalisation d'un revêtement sur une surface intérieure, en particulier celle d'un oeil de bielle ou d'une paroi de cylindre, par projection thermique, **caractérisé en ce qu'**au moins une couche de plus grande porosité est appliquée par projection thermique sur une couche inférieure projetée thermiquement.

3. Procédé selon au moins l'une des revendications précédentes, **caractérisé en ce que** la porosité du revêtement est de 0,2 à 10%, en particulier de 0,5 à 4%.

4. Procédé selon au moins l'une des revendications précédentes, **caractérisé en ce que**, par enlèvement d'une partie du revêtement, le revêtement est amené à une épaisseur usuelle moyenne de préférence de 30 à 800 µm et, en particulier, de 60 à 150 µm.

5. Procédé selon au moins l'une des revendications précédentes, **caractérisé en ce qu'**un enlèvement moyen de 100 à 400 µm, en particulier de 150 à 250 µm, d'une partie du revêtement est prévu.

6. Procédé selon au moins l'une des revendications précédentes, **caractérisé en ce que** le revêtement est réalisé dans une épaisseur, avant enlèvement, de 100 à 600 µm et, en particulier, de 150 à 400 µm.

7. Procédé selon au moins l'une des revendications précédentes, **caractérisé en ce qu'**une faible inclusion d'oxydes du matériau de revêtement dans le revêtement est favorisée par le réglage d'une faible teneur en oxygène dans le flux de gaz.

8. Procédé selon au moins l'une des revendications précédentes, **caractérisé en ce que** le flux de gaz, en tant que gaz non combustible, se compose essentiellement d'azote et/ou d'argon.

9. Procédé selon au moins l'une des revendications précédentes, **caractérisé en ce que** le flux de gaz contient au moins 10% en volume et en particulier au moins 5% en volume d'oxygène.

10. Procédé selon au moins l'une des revendications précédentes, **caractérisé en ce que** le flux de gaz entourant la flamme dirige la flamme.

11. Procédé selon au moins l'une des revendications précédentes, **caractérisé en ce que** la surface intérieure est cylindrique ou tubulaire.

12. Procédé selon au moins l'une des revendications précédentes, **caractérisé en ce que** le revêtement a une porosité superficielle inférieure à 7%, en particulier inférieure à 3%, y compris une porosité formée par des oxydes du matériau de revêtement.

13. Procédé selon au moins l'une des revendications précédentes, **caractérisé en ce que** le diamètre de l'oeil de bielle est usiné sur une cote nominale avec tolérance avant l'application du revêtement.

14. Procédé selon au moins l'une des revendications précédentes, **caractérisé en ce qu'**un usinage par enlèvement de copeaux du revêtement est réalisé.

15. Procédé selon au moins l'une des revendications précédentes, **caractérisé en ce que** l'oeil de bielle est broché.

16. Procédé selon au moins l'une des revendications précédentes, **caractérisé en ce que** l'enlèvement du revêtement projeté thermiquement se produit par enlèvement de copeaux.

17. Procédé selon au moins l'une des revendications précédentes, **caractérisé en ce que** la surface intérieure, en particulier l'oeil de bielle, est rendue rugueuse par un jet de particules avant l'application du revêtement projeté thermiquement.

18. Procédé selon la revendication 17, **caractérisé en ce que** l'oeil de bielle est rendu rugueux avec une rugosité moyenne R_{A} de 4 à 30 µm, en particulier de 6 à 12 µm.

19. Procédé selon au moins l'une des revendications précédentes, **caractérisé en ce que** le revêtement est appliqué par projection au plasma.

20. Procédé selon au moins l'une des revendications précédentes, **caractérisé en ce qu'**un métal, en particulier un alliage de métal, est appliqué comme revêtement.

21. Dispositif pour revêtement au plasma avec un brûleur (51) présentant des orifices d'écoulement (55) pour un verre au plasma, par lequel une flamme (52) peut être formée ainsi qu'avec une alimentation en poudre (57) pour de la poudre métallique à injecter dans la flamme (52), **caractérisé en ce qu'**à l'extérieur des orifices d'écoulement (55), des orifices de sortie de gaz (58) sont prévus par lesquels un gaz, lequel a une teneur en oxygène inférieure à celle de l'air, peut être centrifugé, parallèlement à l'axe de la flamme (52), afin de diriger et de refroidir la flamme et lequel gaz entoure la flamme (52).

22. Dispositif selon la revendication 21, **caractérisé en ce que** le brûleur (51) peut être déplacé de haut en bas lors de son utilisation.

23. Dispositif selon au moins l'une des revendications 21 à 22, **caractérisé en ce que** le brûleur (51) est suspendu de manière à pouvoir pivoter.

24. Dispositif selon au moins l'une des revendications 21 à 23, **caractérisé en ce que** le brûleur (51) décrit une spirale lors de son utilisation.
